# EUROPEAN PATENT APPLICATION

(11) **EP 2 869 569 A1**
(43) Date of publication of application: **06.05.2015**
(21) Application number: 13809276.2
(22) Date of filing: 01.07.2013
(51) Int. Cl.: H04N 7/24

(54) **METHOD AND APPARATUS FOR TRANSMITTING ADAPTIVE MEDIA STRUCTURE IN MULTIMEDIA SYSTEM**

(30) Priority: 29.06.2012 KR 20120071168; 07.08.2012 KR 20120086373
(71) Applicant: Samsung Electronics Co., Ltd., Suwon-si, Gyeonggi-do 443-742 (KR)
(72) Inventor: RHYU, Sung-Ryeul, Suwon-si, Gyeonggi-do 443-742 (KR); PARK, Kyung-Mo, Suwon-si, Gyeonggi-do 443-742 (KR); HWANG, Sung-Oh, Suwon-si Gyeonggi-do 443-742 (KR); SONG, Jae-Yeon, Suwon-si, Gyeonggi-do 443-742 (KR)
(74) Representative: Nederlandsch Octrooibureau
(86) International application number: PCT/KR2013/005821
(87) International publication number: WO 2014/003515

(57) **Abstract**

A method for transmitting an adaptive media structure in a multimedia system according to the present invention includes the steps of combining a media fragment unit (MFU) and a media processing unit (MPU) into a single asset, and transmitting the asset included in CI (composition information), wherein the MFU includes the type information representing AU (Access Unit) type or slice type.

## Description

### BACKGROUND OF THE INVENTION

### Field of the Invention

The present invention relates to a multimedia system, to a method and apparatus for transmitting adaptive media composition particularly in the multimedia system.

### Description of the Related Art

The broadcasting and communication convergence age has arrived thanks to the development of digital technologies, so that a consumption environment of an image, music, and other entertainment media has expanded through broadcasting and communication convergence media such as an Internet Protocol Television (IPTV), a smart TV and the like. Such a consumption environment has advanced an environment where users receive a unidirectional service for one media by using consumption media into an environment where users can simultaneously consume various information due to the development of terminals and communication technologies, and media consumption through which a consumer acquires only desired information has become generalized.

A Mathematical Programming with Equilibrium Constraints (MPEC)-2 system is a system for broadcasting and defines a system for synchronization of media including video and audio data and multiple transmission. In the MPEG-2 system, there is freedom to add a new program to the media and remove an existing program, and the media are multiplexed in the unit of 188 bytes for synchronization of audio and video data. Accordingly, the MPEG-2 system requires demultiplexing for editing and reproducing some programs and revises the specification for transmission whenever a new codec is made.

The MPEG-4 system defines a system for storing a file. Transmission data in the MPEG-4 system includes metadata and media data. The metadata defines data for editing and referring to external resources. Adding a new program and removing an existing program does not come easy to an MPEG-4 system unlike the MPEG-2 system. The MPEG-4 system should update all metadata. The MPEG-4 system also revises the specification for transmission whenever a new Coder/decoder (Codec) is made like the MPEG-2.

As described above, the conventional multimedia system cannot dynamically add or remove a program, cannot process media during a transport process in a transport layer or a storage process in a storage layer without understanding of the codec, and has not proposed a container format which can be used in common in the transport process and the storage process.

### SUMMARY OF THE INVENTION

### Problems to be solved by the invention

The present invention provides a method and an apparatus for transmitting adaptive media composition for dynamically adding and removing a program in a multimedia system.

Further, the present invention provides a method and an apparatus for transmitting adaptive media composition in a transport or storage layer without understanding of a codec in a multimedia system.

In addition, the present invention provides a method and an apparatus for transmitting adaptive media composition including a storage space which can be used in common for transport and storage in a multimedia system.

### Means for solving problems

In accordance with an aspect of the present invention, a method of transmitting adaptive media composition in a multimedia system is provided. The method includes configuring Media Fragment Units (MFUs) included in an Access Unit (AU) and a Media Processing Unit (MPU) as one asset; and inserting the configured asset into Composition Information (CI) and transmitting the CI, wherein the MFU includes type information indicating whether the MFU corresponds an AU type or a slice type.

In accordance with another aspect of the present invention, a method of transmitting adaptive media composition in a multimedia system is provided. The method includes configuring Media Fragment Units (MFUs) included in an Access Unit (AU) and a Media Processing Unit (MPU) including information on a number of MFUs as one asset; and inserting the configured asset into Composition Information (CI) and transmitting the CI.

In accordance with another aspect of the present invention, an apparatus for transmitting adaptive media composition in a multimedia system is provided. The apparatus includes a controller that configures a Media Fragment Unit (MFU) and a Media Processing Unit (MPU) as one asset; and a transmitter that inserts the configured asset into Composition Information (CI) and transmits the CI according to a control of the controller, wherein the MFU includes type information indicating whether the MFU corresponds to an Access Unit (AU) type or a slice type.

In accordance with another aspect of the present invention, an apparatus for transmitting adaptive media composition in a multimedia system is provided. The apparatus includes a controller that configures Media Fragment Units (MFUs) included in an Access Unit (AU) and a Media Processing Unit (MPU) including information on a number of MUFs as one asset; and a transmitter that inserts the configured asset into Composition Information (CI) and transmits the CI according to a control of the controller.

### Effects

the present invention proposes adaptive media composition that can process media in a transport or storage layer without understanding of a codec.

### BRIEF DESCRIPTION OF THE DRAWINGS

The above and other aspects, features, and advantages of the present invention will be more apparent from the following detailed description taken in conjunction with the accompanying drawings, in which:
FIG. 1 illustrates an operation when design for an MPU and an MFU is required according to the present invention;
FIG. 2 illustrates an operation using an EDC and a start code according to a third embodiment of the present invention;
FIG. 3 illustrates a logical asset configuration using an asset identifier and a sequence number within an MPU according to a fourth embodiment of the present invention;
FIG. 4 illustrates a method of providing presentation information in a closed GOP in which an IDR picture, a B picture, and a P picture are arranged in a decoding order according to a fifth embodiment of the present invention;
FIG. 5 illustrates a method of providing information indicating the decoding order in the closed GOP in which the IDR picture, the B picture, and the P picture are arranged in a presentation order according to the fifth embodiment of the present invention;
FIG. 6 illustrates a method of providing presentation order information in an open GOP in which a CRA picture, the B picture, and the P picture are arranged in the decoding order according to the fifth embodiment of the present invention;
FIG. 7 illustrates a method of providing decoding order information in the open GOP in which the CRA picture, the B picture, and the P picture are arranged in the presentation order according to the fifth embodiment of the present invention;
FIG. 8 illustrates a method of finding a time at which a reproduction is performed in MPU composition and performing the reproduction according to a sixth embodiment of the present invention;
FIG. 9 illustrates composition of an MPU box according an eighth embodiment of the present invention;
FIG. 10 illustrates composition of mfu_ Box according to a ninth embodiment of the present invention;
FIG. 11 illustrates composition of mpu_ Box and mfu_ Box according to a tenth embodiment of the present invention;
FIG. 12 is a block diagram illustrating a configuration of a transmission apparatus for generating and then transmitting adaptive media composition according to an embodiment of the present invention; and
FIG. 13 is a block diagram illustrating a configuration of a reception apparatus for receiving media contents according to an embodiment of the present invention.

### DETAILED DESCRIPTION OF EXEMPLARY EMBODIMENTS

Hereinafter, various embodiments of the present invention will be described with reference to the accompanying drawings. In the following description, only parts required for understanding of operations according to the present invention will be described and other parts except for the parts will be omitted not to make the subject matter of the present invention unclear.

A main subject matter of the present invention is to provide designs of a Media Fragment Unit (MFU) and a Media Processing Unit (MPU) and operations of transport and storage layers using the MFU and the MPU in order to dynamically add and remove a program from a multimedia system, to transmit adaptive media composition in the transport or storage layer without understanding of a codec, and to provide adaptive media composition including a container format which can be used in common for transport and storage. Accordingly, a method and an apparatus for transmitting/receiving adaptive media composition in a multimedia system according to an embodiment of the present invention will be described in detail.

For assisting in understanding of the present invention, concepts of a plurality of transport units used throughout the specification will be described hereinafter.

The term "slice" may refer to a split unit of splitting one frame in a band shape.

The term "Access Unit (AU)" may refer to a transport unit that, when the media data corresponding to one frame is coded, defines a length of the coded media data.

The term "Media Fragment Unit (MFU)" is smaller than or equal to the AU and may refer to a transport unit which can be independently decoded (or consumed) by a random media decoder.

The term "Media Processing Unit (MPU)" is a transport unit including at least one MFU and may refer to a transport unit of complex media contents including at least one of various function information such as time information, importance, and Random Access Position (RAP) information.

The term "asset" is a transport unit including at least one MPU and may refer to a transport unit of receiving a unit structure suitable for attributes of various types of multimedia sources such as video, audio, text, file, widget and the like, that is, multimedia data to configure complex media contents.

Operations of an encapsulation layer and a transport layer which have been discussed up to now are as follows.

First, coded media data configured in a codec layer is coded into a Network Abstraction Layer Unit (NALU) and transmitted to an MPEG Media Transport (MMT) layer (or lower layer).

The MMT layer configures the coded media data in the transport unit of MFUs and then configures it in the transport unit of MPUs so as to configure one asset.

The asset includes a plurality of assets and is configured to be temporally/spatially expressed and consumed by MMT-Composition Information (CI) expressing a relation between the assets, and then is transmitted to a receiver side. The MMT-CI is periodically transmitted to the receiver side through a signaling message, and the receiver side can know which contents are being broadcasted or can be reproduced through the MMT-CI.

The receiver side extracts and then uses only a necessary asset from the plurality of assets with reference to the MMT-CI periodically transmitted through the transport layer.

**[Table 1]**

| |
|---|
| ```
MFU_Header() {
 MFU_Information() {
         mfu_length;
         header_length;
         start_end_indicator;
 }
 MFU_Indicator() {
         priority;
         If(priority != 0)
                  dependency_counter;
  }
 }
 MFU_Payload()
``` |

[Table 1] above shows composition information of the MFU indicating composition of the current MFU. The composition information of the MFU may be shown in header information of the MFU (MFU_Header).

The header information of the MFU (MFU_Header) includes base information of the MFU (MFU_Inforamtion) and indicator information of the MFU (MFU_Indicator).

The basic information on the MFU (MFU_Information) includes length information of the MFU (mfu_length), length information of the header (header_length), and position information (start_end_indicator) indicating a position of the MFU within the whole AU.

The indicator information of the MFU (MFU_Indicator) includes priority information (priority) indicating a priority or importance which the MFU has within the whole AU and dependent counter information (dependency_counter) indicating the number of other MFUs referred to by the MFU itself.

A value of the dependent counter information (dependency_counter) corresponds to a value of dependent MFU count within the unit in which an independent encoding/decoding is possible. For example, when the dependent counter value is "4", corresponding MFU data refers to information indicating that four other MFUs adjacent to the MFU have a dependent relation (or reference relation) with the corresponding MFU. For example, when there are four associated MFUs, a first MFU has a counter value of 3, a second MFU has a value of 2, a third MFU has a value of 1, and a last MFU has a value of 0. When the corresponding MFU data has an error, a degree of propagation of the error may be indicated by using the dependent counter information.

**[Table 2]**

| |
|---|
| ```
 MPU_Header() {
 MPU_Information() {
         mpu_length;
         header_length;
 }
 MPU_Identifier() {
         rap_flag;
         mpu_sequence_number;
 }
 MPU_Internal() {
         number_of_au;
         for(int i=0; i<number_of_au; i++) {
                  au_length;
          }
 }
 private_header_flag;
 if(private_header_flag == 1) {
         MPU_Private() {
                  private_header_length
                  private_header
          }
  }
 }
        MPU_Payload()
``` |

[Table 2] above shows composition information of the MFU indicating composition of the current MPU.

The composition information of the current MPU includes basic information of the MPU (MPU_Information), identification information of the MPU (MPU_Identifier), internal information of the MPU (MPU_Internal), and expansion information of the MPU (private_header_flag).

The basic information of the MPU (MPU_Information) includes length information of the MPU (mpu_length) indicating a length of the MPU and length information of the header (header_length) indicating a length of the header.

The identification information of the MPU (MPU_Identifier) includes flag information (rap_flag) indicating whether there is a Random Access Point (RAP) in the MPU and sequence number information (mpu_sequence_number) indicating an order of the corresponding MPU (MPU itself) within the asset. The RAP is random access point information on the corresponding MPU, and video data using the random access point information can provide a random reproduction function.

The internal information of the MPU (MPU_Internal) includes number information of AUs (number_of_au) included in the MPU and length information of each of the AUs (au_length) included in the MPU.

The expansion information of the MPU (private_header_flag) includes length information of a private header (private_header_length) and private header information (private_header) for future expansion.

**[Table 3]**

| |
|---|
| ```
 MMT_Asset() {
 asset_identification
 asset_type
 asset_codepoint
 mpu_index_flag
 if(mpu_index_flag == '1')
         no_of_mpu
         for(i=0;i< no_of_mpu; i++) {
                mpu_position
       }
       T.B.D
       asset_length
       For(i=0;i<no_of_mpu;i++) {
              MPU()
       }
}
``` |

[Table 3] above shows composition information of the asset indicating composition of the current asset.

The composition information of the current asset includes identifier information (asset_identification) identifying the corresponding asset, type information (asset_type) indicating a media type, compatibility identification information (code point) for identifying compatibility, number information of MPUs (no_of_mpu) included in the asset, position information of each of the MPUs (mpu_position) included in the asset, and total length information of the corresponding asset (asset_length).

### First embodiment

The first embodiment of the present invention proposes efficient MFU composition for providing adaptive media composition.

Composition information of the MFU according to the first embodiment of the present invention includes types information (mfu_type) that distinguishes between an AU type and a slice type of the corresponding MFU as shown in [Table 4] below. If it can be identified through the type information (mfu_type) that the MFU corresponds to the AU type, providing (describing or expressing) information (attribute information of the AU) indicating attributes of the AU to the composition of the MFU is inefficient. A method of identifying the AU type can be performed by searching at least one of whether the AU including the MFU corresponds to the RAP, whether the AU corresponds to an Instantaneous Decoding Refresh (IDR) picture, and whether the AU corresponds to a Clean Random Access (CRA) picture. Descriptions of the IDR picture and the CRA picture will be made below.

The attribute information of the AU includes at least one of priority information (priority) and dependent counter information (dependency counter). Accordingly, as shown in [Table 4] below, the type information (mfu_type) is provided to the MFU composition information according to the first embodiment of the present invention, at least one of the priority information (priority) and the dependent counter information (dependency counter) is not provided (described or expressed) to the MFU composition information unlike the MFU composition information in [Table 1] when the MFU corresponds to the AU type, and the priority information (priority) and the dependent counter information (dependency counter) are provided (described or expressed) to the MFU composition information when the MFU does not correspond to the AU type or corresponds to the slice type.

When the MFU does not corresponds to the AU type and is included in only a part of the AU, mfu_type may be provided (described or expressed) in a form of position information (start_end_indicator) indicating a position of the MFU within the whole AU as shown in [Table 5] below. In this case, it is preferable to operate as if a value of mfu_type is the AU when a value of the position information (start_end_indicator) indicates the whole AU.

**[Table 4]**

| |
|---|
| ```
 MFU_header() {
 ...
 mfu_type;
 ...
 if(mfu_type == AU) {
         ...
 }
 else(mfu_type!= AU) {
         priority;
         dependency_counter;
 }
 ...
 }
``` |

**[Table 5]**

| |
|---|
| ```
 MFU_header() {
 ...
 mfu_type;
 ...
 if(start_end_indicator == AU) {
         ...
 }
 else(start_end_indicator != AU) {
         priority;
         dependency_counter;
 }
 ...
 }
``` |

### Second embodiment

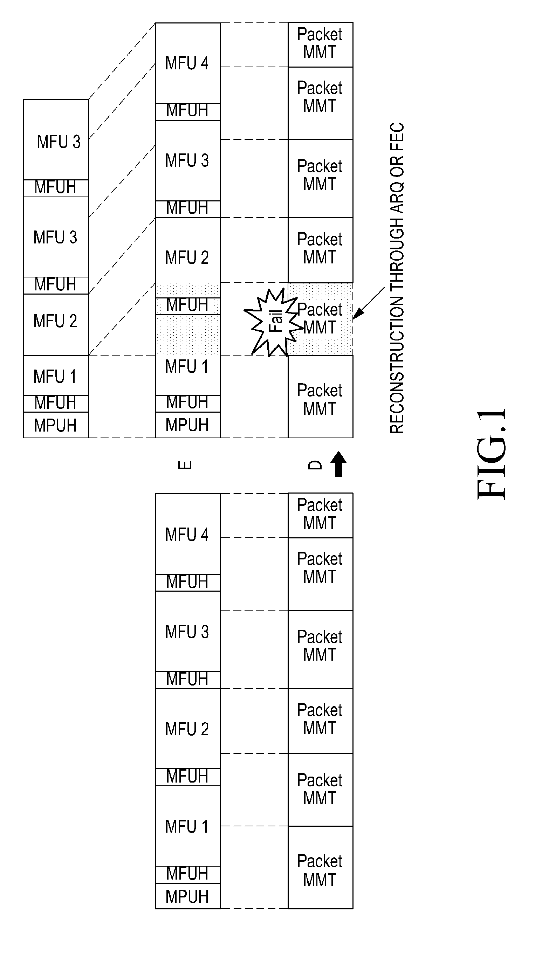

FIG. 1 is a diagram describing composition of a transport packet and composition of a reception packet when a transport error is generated.

When the transport error shown in FIG. 1 is generated, a design of composition of the MPU and MFU tolerant of the transport error is required.

When a transport error is generated in which some of the MFUs are not transmitted in a transport process of the transport layer or a storage error is generated in a storage process of the storage layer, it is preferable to accept the situation where some of the MFUs are not transmitted for efficient transport or storage.

The MMT packet prepares for errors on various transport paths by using Automatic Repeat Request (ARQ), Forward Error Correction (FEC) and the like. When a transport failure is generated in spite of the preparation for the errors on the transport paths, the transport failure refers to transport failure in the unit of MMT packets.

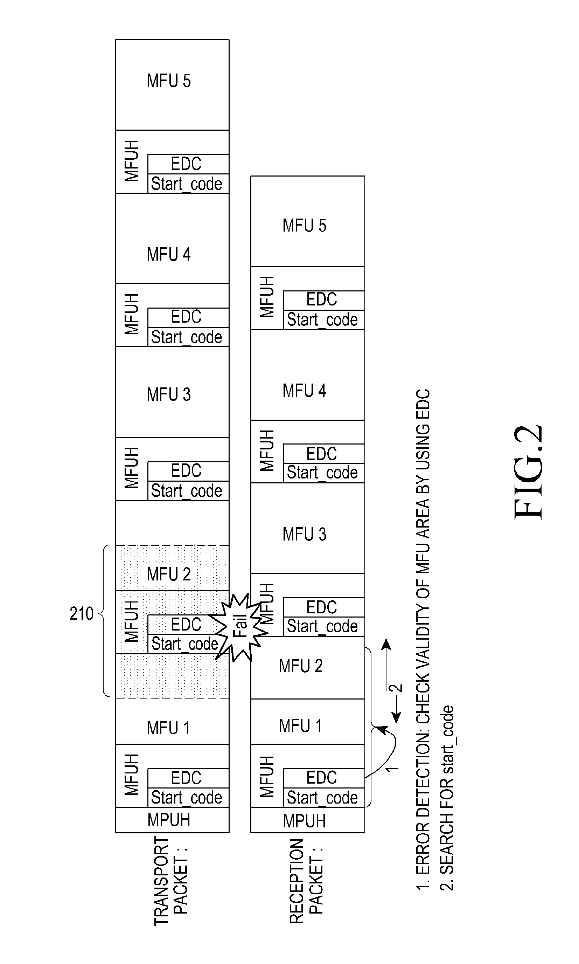

As illustrated in FIGs. 1 and 2, when the MPU is transmitted, the transport layer fragments the MPU and carries the fragmented MPUs on a plurality of MMT packets to transmit them. Accordingly, one MPU includes a plurality of MMT packets, and also includes a plurality of MFUs.

The current transport layer provides (describes or expresses) composition in which one MPU includes a plurality of MMT packets and composition in which one MPU includes a plurality of MFUs, but does not define a structural correspondence relation between the MMT packets and the MFUs considering a transport efficiency. Accordingly, when a plurality of MMT packets are lost, the conventional transport and storage layers do not provide information on a transport loss part which shows which MFU the transport loss was generated from and from which part to which part the error is generated.

In other words, the conventional MPU composition information does not provide (describe or express) the information of the AU by using an offset, that is, a header information length of the MPU as shown in [Table 2]. Accordingly, when some of the payloads are omitted/damaged by the transport error or storage error in the transport or storage layer, information based on the offset all becomes unreliable information and there is no method of identifying integrity at present.

Therefore, a second embodiment of the present invention proposes an improved method in which the MPU indicates the MFU and a method of identifying integrity of the MPU and the MFU.

As described above, although the MPU uses the offset to tie MFUs included in the AU, when some of the MMT packets are omitted, all information related to the AU included in the MFU carried by the omitted MMT packet needs to become invalid. Accordingly, it is required to provide the number of MFUs included in the AU instead of the offset.

[Table 6] below shows an example of composition information of the MPU including information on the number of MFUs included in the AU in the MPU.

**[Table 6]**

| |
|---|
| ```
 mpu_header() {
 ...
 number_of_au;
 for(...) {
         number_of_mfu; //three, four, three, ...
 }
 ...
 }
``` |

In this case, when a total number of MFUs is different from the expressed one, it may mean there is an omitted MFU. However, there is still a disadvantage in that when a third MFU is omitted, it cannot be known which MFU is omitted through analysis of the MFUs within the payload.

Accordingly, it is required that the MFU includes identification information (mfu_id) for identifying the MFU itself as shown in [Table 7] and the MPU describes which MFUs are included in every AU as shown in [Table 8]. [Table 7] below shows composition information of the MFU to which Mfu_id is applied, and [Table 8] below shows AU information of the MPU indicating Mfu_id.

**[Table 7]**

| |
|---|
| ```
 Mfu_header() {
         ...
         mfu_id;
         ...
 }
``` |

**[Table 8]**

| |
|---|
| ```
 mpu_header() {
         ...
         number_of_au;
         for(i=0;i<number_of_au;i++) {
                  number_of_mfu;
                  for(j=0;j<number_of_mfu;j++) {
                           mfu_id;
          }
 }
 ...
 }
``` |

When the information is made as shown in [Table 8], the information of the AU may be valid even if the MFU is omitted halfway.

### Third embodiment

When there is an omission of the MFU due to a transport error, it should be distinguished between a case where the omission is generated in the unit of MFUs and a case where the omission is generated without maintaining boundaries of the MFUs. When the omission is generated in the unit of MFUs, the AU including the omitted MFU can be detected by using identification information of the MFU. However, when a part of the MFUs, for example, header information is omitted as illustrated in FIG. 1, parsing of the MFU has a problem.

As described above, when a part of the MFUs is omitted, a start code and an Error Detection Code (EDC) need to be used to find a next valid MFU.

[Table 9] below shows an example of detecting a boundary between the MFUs through the use of the start code and verifying validity through the use of the EDC.

**[Table 9]**

| |
|---|
| ```
 Mfu_header() {
 Start_code;
 EDC;
 ...
 }
``` |

FIG. 2 illustrates operations using the EDC and the start code according to a third embodiment of the present invention.

In FIG. 2 it is assumed that a transport error is generated in an MMT packet corresponding to a red shaded section 210 of the transmitted packets. A part from a middle of MFU1 to a middle of MFU2 corresponds to an omitted part due to MMT packet loss. Accordingly, a receiver side receives a reception packet having MFU1 including a header and a part of payloads of MFU1 and a part of payloads of MFU2.

While the receiver side processes the MPU, the EDC is read from header information of MFU1 and an error detection process is performed for data corresponding to a length of MFU1. Since a result of the error detection process and a value of the EDC have different values through comparison, it can be known that MFU1 has an error. Processing of MFU1 having the error is postponed, and a search for start_code is performed before and after an expected end point of MFU1 to find a next MFU. Start_code is a value having an appointed pattern, and the pattern is determined from patterns having a low repetition probability such as 00 00 01B,'M' 'F'or 'U'and then the determined pattern is used. Start_code is found through the search and the error detection process is performed using a next EDC. When it is identified that the MFU is a valid MFU, mfu_id of the corresponding MFU is recognized, and thus it can be identified which MFU is omitted or lost and which MFU is valid.

### Fourth embodiment

The MPU is a unit which can independently perform processing (or encoding or decoding) without the need of an access to a previous MPU and a next MPU.

The asset includes a plurality of MPUs, and the asset header of each asset includes the number of MPUs and lengths of the MPUs.

However, when broadcasting is considered, the asset may have a limitless length. When listening to the broadcasting starts in the middle of the broadcasting, an MPU corresponding to a current broadcasting time should be found after the header of the asset is found. When such a matter is considered, providing (describing or expressing) information indicating which asset includes the MPU to the MPU composition information is more efficient rather than providing (describing or expressing) information indicating which MPU is included in the asset to the asset composition information. Further, it is efficient to provide initialization information required for reproduction of the MPU to the MPU composition information.

Accordingly, it is preferable that identification information (asset_identification) among the information included in the asset header is inserted into the MPU composition information in [Table 3]. It is preferable that Asset_type and Asset_codepoint are included in the MMT-CI since they are information used as the basis of determination before the asset is consumed.

No_of_mpu, mpu_position, and Asset_length are meaningless values unless they are stored in a file. Accordingly, it is preferable that No_of_mpu, mpu_position, and Asset_length are included as one of information to be described when they are separated from the asset and the MMT package is stored in a file.

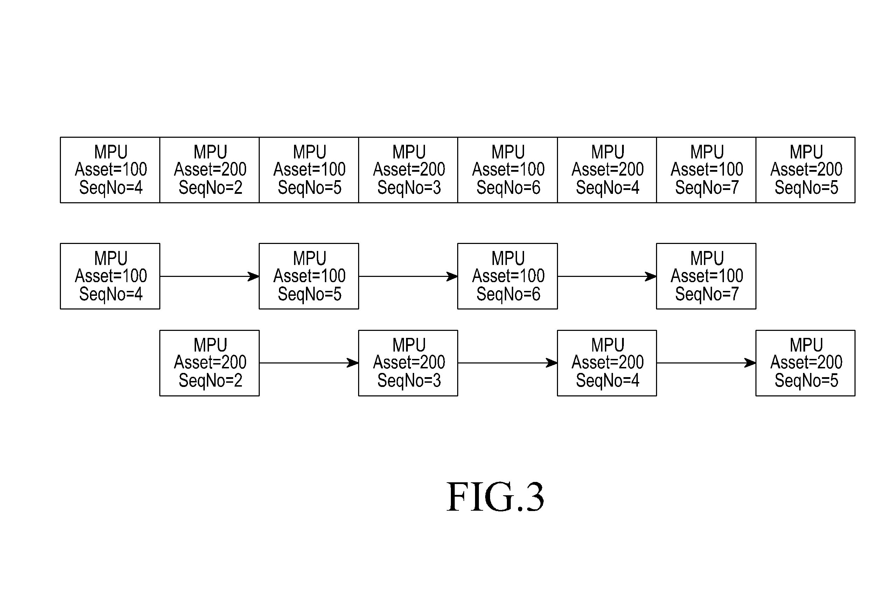

Accordingly, when the MPUs are configured as shown in [Table 10] and a plurality of MPUs are mixed with various media types of assets as illustrated in the top of FIG. 3, the MPUs having the same asset identifier (Asset_id) are collected, and the context (or order) between the collected MPUs may be detected using the sequence number (sequence_number) of each of the collected MPUs.

**[Table 10]**

| |
|---|
| ```
 mpu_header() {
 ...
 asset_id;
 sequence_number;
 ...
 }
``` |

FIG. 3 illustrates logical asset composition using the asset identifier and the sequence number within the MPU according to a fourth embodiment of the present invention.

As illustrated in FIG. 3, when an identifier of the package is used in addition to the asset identifier (asset_id) and the sequence number (sequence_number) of the MPU, the MPU may be used as the unit independently stored and used in a network node such as a CDN, a Cache or the like.

### Fifth embodiment

The fifth embodiment of the present invention relates to a provision of additional information for time media transport to the MPU composition information. In this case, the MPU is used as the unit for transmitting/storing media having a time attribute or a non-time attribute.

In order to distinguish types of media transmitted by the MPU, information indicating the time attribute (NON_TIMED) of mpu_type is provided to the type information of the MPU according to the first embodiment as shown in [Table 11]. Since the header information of the MPU includes feature information of time media or feature information of non-time media according to mpu_type, the use of mpu_type corresponds to information required for efficient header composition.

**[Table 11]**

| |
|---|
| ```
 Mpu_header() {
 ...
 mpu_type; //AU_SET, NON_TIMED
 ...
 }
``` |

[Table 11] above indicates type information of the MPU to which information of the time attribute is added.

When media data included in the MPU is time media including one or a plurality of AUs, mpu_type is expressed by "AU_SET". When the media data included in the MPU is non-time media, mpu_type is expressed by "AU_SET" and "NON_TIMED".

The conventional MPU composition information does not express information related to a time value of the AU, so that it is required to provide time values of the AUs included in the MPU when mpu_type is AU_SET.

The information related to the time value of the AU may consider information related to a presentation time and information related to a decoding time, and additionally consider information related to a decoding order and information related to a presentation duration.

AU arrangement composition may be divided into composition in which the AUs are arranged at regular time intervals and composition in which the AUs are arranged at random time intervals. Since an interval of presentation time may be expressed by a duration, time and intervals of the AUs arranged in a presentation order may be expressed by a default duration.

[Table 12] below shows an example of the MUP composition information including composition information of the AUs arranged at regular time intervals, and [Table 13] below shows an example of the MPU composition information including composition information of the AUs arranged at random time intervals.

As shown in [Table 12], when a default duration is 0, a field may be expressed in an on/off type such that a duration is provided to every AU in order to express the random time interval arrangement.

When a flag (duration_flag) expressing a duration (ARBITRARY_DURATION) for a random AU is additionally provided as well as a default duration as shown in [Table13], the corresponding AU may be expressed by a separate duration and the remaining AUs may be expressed by a default duration.

**[Table 12]**

| |
|---|
| ```
 Mpu_header() {
 ...
 number_of_au;
 default_duration_of_au;
 for(i=0; i<number_of_au;i++) {
         if(default_duration == 0) {
                  duration_of_au;
          }
          ...
 }
 ...
 }
``` |

**[Table 13]**

| |
|---|
| ```
 Mpu_header() {
 ...
 number_of_au;
 default_duration_of_au;
 for(i=0; i<number_of_au;i++) {
         duration_flag;//NONE, ARBITRARY_DURATION
         if(duration_flag == ARBITRARY_DURATION) {
                  duration_of_au;
          }
          ...
 }
 ...
 }
``` |

Order information of the AU (order_of_au) may consider presentation order information (presentation_order), decoding order information (decoding_order), and random order information (UNKNOWN). The presentation order refers to reproduction orders of an Intra (I) picture, a Bi-predictive (B) picture, and a Predictive (P) picture within a Group of Picture (GOP), and the decoding order refers to coding orders of the I picture, the B picture, and the P picture. The GOP refers to the unit of grouping several pictures as one group. The I picture, the B picture, and the P picture are terms used in a GOP layer, wherein the I picture corresponds to a picture acquired by being independently encoded regardless of previous and next pictures, and the P picture corresponds to a picture acquired by forward predictive encoding between pictures. The B picture corresponds to a picture acquired by a predictive encoding from two directions of the past and future.

The decoding order information (decoding_order) is separately provided to the MPU composition information when the AUs are arranged according to the presentation order, and the presentation order information (presentation_order) is separately provided to the MPU composition information when the AUs are arranged according to the decoding order. Further, when the AUs are arranged according to the random order, the decoding order information (decoding_order) and the presentation order information (presentation_order) are separately provided.

Since a certain AU includes a Random Access Point (RAP) which can be reproduced without a decoding of a previous AU according to a dependent relation with another AU, an expression thereof is provided through RAP_flag.

**[Table 14]**

| |
|---|
| ```
 Mpu_header() {
 ...
 number_of_au;
 if(number_of_au > 1) {
 order_of_au;//PRESENTATION, DECODING, UNKNOWN
 }
 for(i=0; i<number_of_au;i++) {
         if(order_of_au == PRESENTATION) {
                  decoding_order;
          }
         else if(order_of_au == DECODING) {
                  presentation_order;
          }
         else if(order_of_au == UNKNOWN) {
                  decoding_order;
                  presentation_order;
          }
         rap_flag;// TRUE,FALSE
         ...
 }
 ...
 }
``` |

>

[Table 14] above shows a provision of order information according to various AU arrangements and proposes a method of providing additional information on the order of AUs when the number of AUs is larger than 1. When the number of AUs is 1, an order value generated from the relation with another AU is not established.

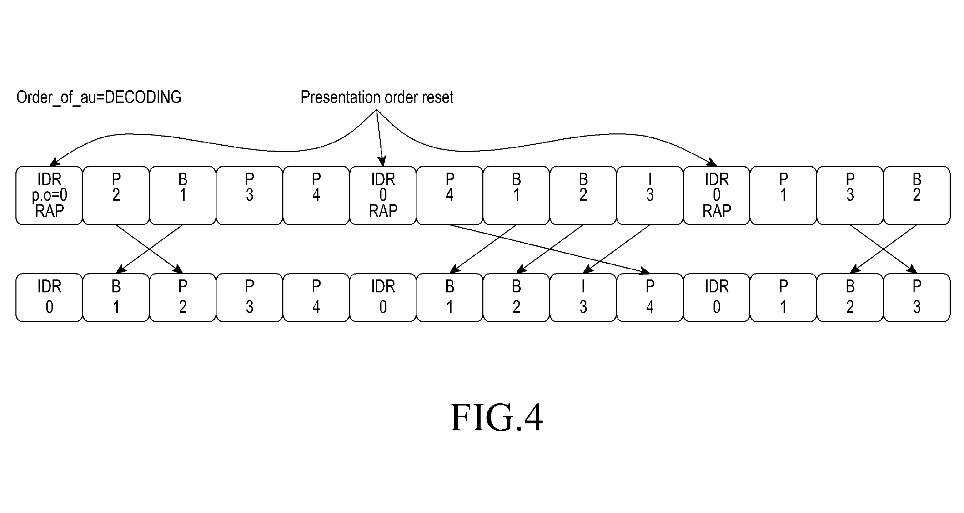

By assembling the aforementioned order_of_au and presentation_order or decoding_order, composition information associated with the time of the AU within the MPU may be all expressed as illustrated in FIGs. 4 to 7.

FIG. 4 illustrates a method of providing presentation information in a closed GOP in which the Instantaneous Decoding Refresh (IDR) Picture, the B picture, and the P picture are arranged according to the decoding order according to the fifth embodiment of the present invention. The closed GOP refers to a GOP which is not dependent on a previous GOP, but is independently coded and reproduced.

A method of expressing composition information associated with the time of the AU provided by the present invention provides an order type (DECODING=arranged according to the decoding order) of the AU, a presentation order number of each AU, and existence or nonexistence of the RAP.

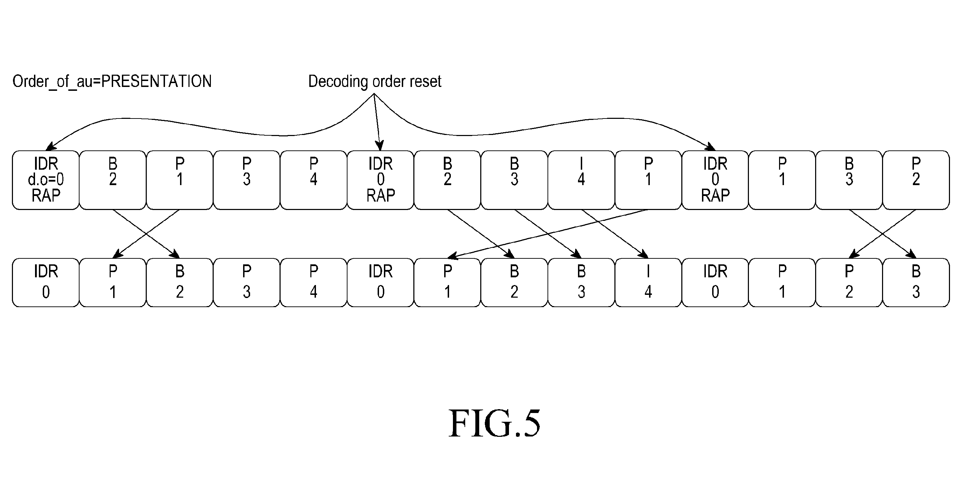

Accordingly, the closed GOP in which the pictures are arranged according to the decoding order as illustrated in FIG. 4 can be rearranged according to the presentation order and reproduced from the RAP as illustrated in the bottom of FIG. 5.

FIG. 5 illustrates a method of providing decoding order information in the closed GOP in which the IDR picture, the B picture, and the P picture are arranged according to the presentation order according to the fifth embodiment of the present invention. The IDR picture is a leading picture of an image sequence and is used for initializing information indicating a buffer state of a reference picture, a frame number, and output orders of the pictures in order to decode picture bitstreams.

The closed GOP in which the pictures are arranged according to the presentation order as illustrated in FIG. 5 can be rearranged according to the decoding order and reproduced from the RAP as illustrated in the bottom of FIG. 5.

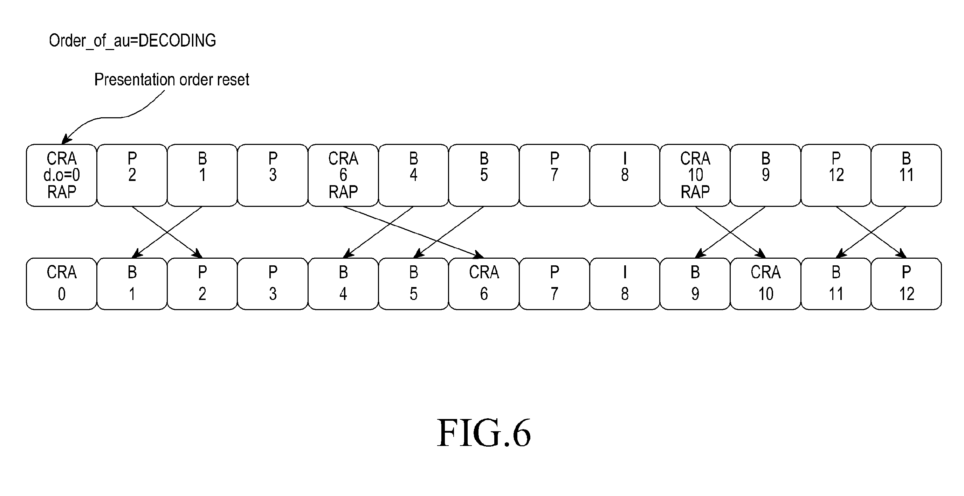

FIG. 6 illustrates a method of providing presentation order information in an open GOP in which a Clean Random Access (CRA) picture, the B picture, and the P picture are arranged according to the decoding order according to the fifth embodiment of the present invention. The open GOP refers to a GOP which is dependent on a GOP previous to a current GOP to be dependently compressed and reproduced.

Referring to FIG. 6, the open GOP in which the pictures are arranged according to the decoding order as illustrated in the top of FIG. 6 can be rearranged according to the presentation order and reproduced from the RAP as illustrated in the bottom of FIG. 6.

B4 and B5 are leading pictures, which are behind CRA6 based on the decoding order but before CRA 6 based on the presentation order. Accordingly, when existence or nonexistence of the RAP, the presentation order, and the decoding order are considered, it is possible to make a decision not to put the corresponding pictures (B4 and B5) into the decoder or to decode but not use them before the corresponding pictures are transmitted to the decoder as input values.

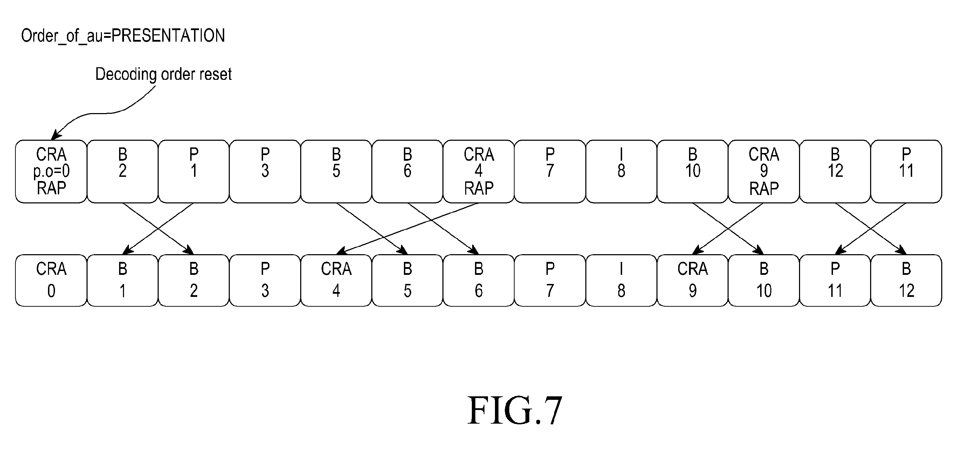

FIG. 7 illustrates a method of providing decoding order information in the open GOP in which the CRA picture, the B picture, and the P picture are arranged according to the presentation order according to the fifth embodiment of the present invention. Referring to FIG. 7, the open GOP in which the pictures are arranged according to the presentation order as illustrated in the top of FIG. 7 can be rearranged according to the decoding order and reproduced from the RAP as illustrated in the bottom of FIG. 7.

### Sixth embodiment

The sixth embodiment of the present invention relates to decoder setting information for the independent use of the MPU.

The MPU is a unit which can be independently used without access to previous and next MPUs. Accordingly, it is preferable that the MPU includes decoder setting information on AUs included in the MPU. Therefore, the decoder setting information is provided to the MPU composition information when the type of the MPU corresponds to the AU. It is preferable that the decoder setting information is provided as additional information on the AU to which the corresponding decoder setting information is applied when a plurality of decoder setting information is provided according to a time section.

**[Table 15]**

| |
|---|
| ```
  Mpu_header() {
  ...
  number_of_au;
  ... 
 for(i=0; i<number_of_au;i++) {
         ...
         decoder_config_flag; //TRUE, FALSE
         if(decoder_config_flag == TRUE) {
                  sps;
                  pps;
                  extra_decoder_configuration;
          }
  }
  }
``` |

[Table 15] above shows header composition of the MPU that provides the decoder setting information.

The decoder setting information includes information such as a Sequence Parameter Set (SPS), a Picture Parameter Set (PPS), a DCT, a motion vector and the like, and the corresponding information is provided in a form of continuous columns of the NAL unit. The SPS is information including information used to encode the entire sequence, and the PPS is information indicating an encoding mode of the entire picture, for example, an entropy encoding mode, a quantization parameter initial value of the picture unit and the like.

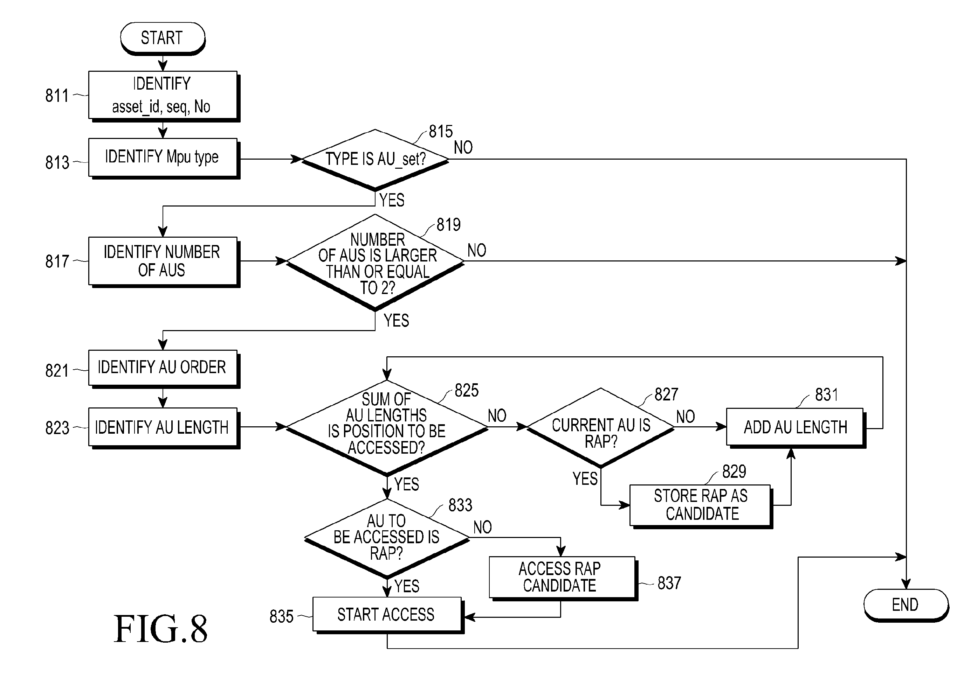

Accordingly, when the MPU according to the present invention is randomly accessed from the RAP as shown in [Table 16], processing a decoding process in the order as shown in FIG. 8 is proposed.

**[Table 16]**

| |
|---|
| ```
 Mpu_header() {
 mpu_length;
 mpu_type;
 asset_id;
 sequence_number;
 if(mpu_type==AU_SET) {
              number_of_au;
              default_duration_of_au;
         if(number_of_au> 1) {
         order_of_au; //PRESENTATION,
                                    //DECODING, UNKNOWN
 }
         for(i=0;i<number_of_au;i++) {
                  if(default_duration == 0) {
                          duration_of_au;
                  }
                  if(order_of_au == PRESENTATION) {
                          decoding_order;
                  }
                  else if(order_of_au == DECODING) {
                          presentation_order;
                  }
                  else if(order_of_au == UNKNOWN) {
                          decoding_order;
                          presentation_order;
                  }
                  rap_flag;// TRUE,FALSE
                  number_of_mfu;
                  for(j=0;j<number_of_mfu;j++) {
                          mfu_id;
                  }
          }
        }
        else if(mpu_type == FILE) {
           ...
        }
 }
``` |

FIG. 8 illustrates a method of finding a time point at which a reproduction will be performed in the MPU composition and performing the reproduction according to the sixth embodiment of the present invention.

Referring to FIG. 8, a process or a reproduction device for finding the time point of the reproduction in the MPU first identifies an asset ID and a sequence number of the MPU to determine whether the MPU corresponds to an MPU having the time of the reproduction in 811.

Next, mpu_type is identified in 813, and it is identified whether mpu_type is an AU_SET type in 815. In 815, when mpu_type is AU_SET, the number of AUs (number_of_au) is identified in 817.

When the number of AUs is 1 in 819, it means that a start time of the MPU indicated by the MMT-CI is a start time of the AU, so that the search ends without a further search. When the number of AUs is larger than or equal to 2 in 819, an order in which the AUs are arranged is identified in 821, and lengths of the AUs are identified in 823.

A sum of the lengths of the AUs indicates an end of a time point at which the reproduction will be performed in the MPU composition, and it is determined whether the time point is a start position of the AUs or a position at which the AU reproducible from a given part will be accessed in 825.

In 825, When the AUs are arranged based the presentation order, the AU in a position at which the reproduction will be performed can be found by sequentially adding duration of the AUs. When the AUs are arranged based on the decoding order or the random order (UNKNOWN), a position of the AU at which the reproduction will be performed is found by converting the decoding order or random order (UNKNOWN) to the presentation order.

Subsequently, in a process of searching for the AU, it is determined whether the AU is the RAP in 827. When the AU is the RAP, a number of the AU is stored as the closest RAP for future use in 829. When the AU is not the RAP, a length of the corresponding AU from the found AU is added.

By repeating steps 825, 827, 829, and 831, the number of the AU corresponding to the time at which the reproduction will be performed can be known in step 835. It is determined whether the AU to be accessed is the RAP in 833, When the AU to be accessed is not the RAP in step 833 the reproduction starts from the number of the closest RAP (candidate RAP) in step 837.

### Seventh embodiment

The seventh embodiment of the present invention relates meta information for non-time media transport of the MPU.

When the MPU transmits non-time media, one or more non-time media may be included in the MPU and the corresponding media is processed as a file.

The file provides information on a name and a size.

The file provides EDC information since it is sensitive to data loss due to the nature thereof. Since the loss is not accepted, it is okay even if a start and an end of the file within the MPU payload are indicated based on the offset and the size unlike AU_SET. [Table 17] below shows MPU header composition that transmits a file.

**[Table 17]**

| |
|---|
| ```
  Mpu_header() {
  ... 
 mpu_type; 
 ...
  if(mpu_type==NON-TIMED) {
         number_of_file;
         for(i=0;i<number_of_file;i++) {
                  file_name;
                  file_offset;
                  file_size;
                  file_edc;
         }
  }
  }
``` |

### Eighth embodiment

The eighth embodiment of the present invention provides the MPU proposed by the present invention and a method of expressing the MPU by using an ISO Base Media file Format (ISOFF) used in MPEG-4.

The ISOFF expresses information of subsamples in the unit of entire tracks or fragments in order to store coded media in the unit of subsamples or to indicate the coded media which is not transmitted. Accordingly, a method of expressing the information on the subsample is taken from the ISOFF and then discussed.

**[Table 18]**

| |
|---|
| ```
 aligned(8) class SubSampleInformationBox
    extends FullBox('subs', version, 0) {
    unsigned int(32) entry_count;
    int i,j;
    for (i=0; i < entry_count; i++) {
       unsigned int(32) sample_delta;
       unsigned int(16) subsample_count;
       if (subsample_count > 0) {
         for (j=0; j < subsample_count; j++) {
             if(version == 1)
              {
                  unsigned int(32) subsample_size;
              }
             else
              {
                  unsigned int(16) subsample size;
              }
             unsigned int(8) subsample_priority;
             unsigned int (8) discardable;
             unsigned int(32) reserved = 0 ;
         }
       }
    }
 }
``` |

[Table 18] above shows composition of a subs box (SubSampleInformationBox) of the current ISOFF.

[Table 18] above corresponds to the 'subs' box which is a method of expressing the information on the subsample in the ISOFF. As shown in [Table 18], one subs box provides a table for composition of subsamples of the entire one track or entire samples of one fragment.

However, the MFU of the MMT is designed to be removable according to a determination made based on priority or dependency_counter by the MFU, so that one table for the entire track or entire fragment allows the removal by the MFU to be impossible.

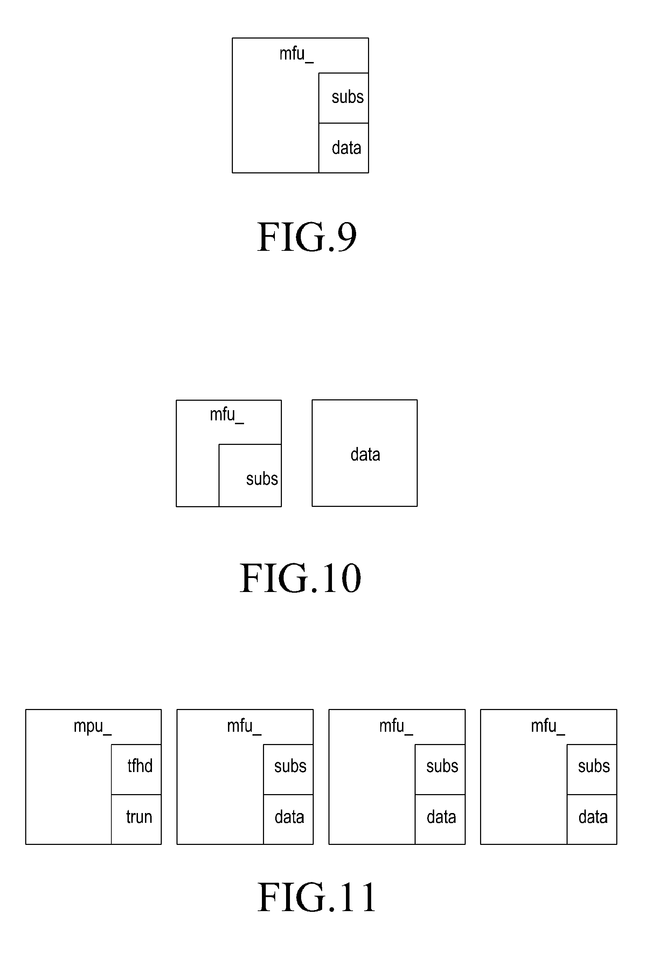

Accordingly, it is preferable to configure mfu_ Box and insert one subs into every mfu_ Box as illustrated in FIG. 9. FIG. 9 illustrates composition of the MFU box according to the eighth embodiment of the present invention.

According to the conventional MFU composition, mfu_ Box is configured as shown in [Table 19] below.

**[Table 19]**

| |
|---|
| ```
 aligned(8) class MediaFragmentUnitBox
  extends Box('mfu ') {
   uint(32) mfu_id;
   SubSampleInformationBox;
  data[];
}
``` |

[Table 19] above shows syntax of mfu_ Box. In [Table 19], mfu_id is an identifier of the MFU which has an inherent value within the MPU. A value of mfu_id may be a combination of significant values or a value increasing with a constant size.

SubSampleInformationBox is a subs box ([Table 20]) and a value thereof is restrictively used as follows to be suitable for the purpose of the MFU.

**[Table 20]**

| |
|---|
| ```
 aligned(8) class SubSampleInformationBox
  extends FullBox('subs', version, 0) {//version is 0
  unsigned int(32) entry_count;//always 1
  int i,j;
  for (i=0; i < entry_count; i++) {
   unsigned int(32) sample_delta;//always zero
   unsigned int(16) subsample_count;//always 1
   if (subsample_count > 0) {
    for (j=0; j < subsample_count; j++) {
     if(version == 1) {
      unsigned int(32) subsample_size; }
     else {
      unsigned int(16) subsample_size; }//mfu data size
      unsigned int(8) subsample_priority;
      unsigned int(8) discardable;
      unsigned int(32) dependency_counter;
    }
   }
  }
 }
``` |

[Table 20] above shows SubSampleInformationBox.

In [Table 20], when a version is 1, the priority of the subsample cannot be expressed, so that the version should be changed to 0. entry_count is the number of subsamples indicated by the subs. Since each of MFU-subs has a pair structure, a value of entry_count should be always fixed to 1.

entry_delta corresponds to a difference between the numbers of previously expressed samples and currently expressed samples. Accordingly, when there are a plurality of MFU-subs pairs with respect to one sample, the value of entry_delta is 0. Since each of MFU-subs has the pair structure, Subsample_count also should be always should be fixed to 1. Subsample_size indicates a size of data included in the MFU, that is, the coded media (a size of the data box in FIG. 9).

Meanwhile, since there is no value corresponding to dependency_counter, 32 bits which are reserved bits are allocated to dependency_counter.

### Ninth embodiment

The ninth embodiment describes another method according to the eighth embodiment, which may have the same composition as shown in FIG. 10.

FIG. 10 illustrates composition of mfu_ Box according to the ninth embodiment of the present invention.

The difference from the eighth embodiment is whether a data box is included in mfu_ Box.

In order to completely remove one MFU-data pair for the operation of the MFU other than the data simply exists outside mfu_ Box, information on which mfu_ Box and which data Box form a pair needs to be provided.

Accordingly, when a size of subsample_size information of the subs Box and a size of the data Box are the same among information included in mfu_ Box, they are recognized as the pair. Therefore, it is preferable to identify a process sizes when the MFU is removed.

That is, when mfu_ Box and the data Box are removed as necessary, it is determined whether subsample_size within the subs Box within mfu_ Box is the same as the size of the data Box. When they are the same, they are recognized as a pair, and then mfu_ Box and the data Box are removed. When the sizes are different, it is preferable to have a process of determining whether there is another data Box having the same size in the MPU.

### Tenth embodiment

The tenth embodiment of the present invention provides a method of expressing the MPU by using the ISOFF for the same purpose as that of the eighth embodiment of the present invention.

The ISOFF has a method of expressing information in the unit corresponding to the AU of the MPU, that is, the unit of samples within the fragment. However, since all information of the MPU cannot be expressed, conventional expression methods such as tfhd Box and trun Box are used and a method of expanding thereof is provided.

Composition of a current tfhd Box is shown in [Table 21] below.

**[Table 21]**

| |
|---|
| ```
aligned (8) class TrackFragmentHeaderBox
                extends FullBox ('tfhd', 0, tf_flags) {
       unsigned int (32) track_ID;
       // all the following are optional fields
       unsigned int(64) base_data_offset;
       unsigned int(32) sample_description_index;
       unsigned int(32) default_sample_duration;
       unsigned int(32) default_sample_size;
       unsigned int(32) default_sample_flags
  }
``` |

[Table 21] shows composition of the tfhd Box (TrackFragmentHeaderBox) of the ISOFF. [Table 21] above corresponds to the tfhd Box that designates a default value of samples expressed by truns in the fragment. Among contents of [Table 21], fields from base_data_offset to default_sample_flags correspond to optional fields that are turned on/off according to a value of tf_flags, and default_duration_of_au of the MPU is indicated by default_sample_duration of tfhd. Accordingly, tf_flags has to necessarily have 0x000008 when being used in the MPU.

Composition of the current turn box is shown in [Table 22] below.

**[Table 22]**

| |
|---|
| ```
 aligned(8) class TrackRunBox
       extends FullBox('trun', version, tr_flags) {
       unsigned int(32) sample count;
       // the following are optional fields
       signed int(32) data_offset;
       unsigned int(32) first_sample_flags;
       // all fields in the following array are optional
       {
   unsigned int(32) sample_duration;
   unsigned int(32) sample_size;
   unsigned int(32) sample_flags
   if (version == 0)
       { unsigned int(32) sample_composition_time_offset; }
   else
       { signed int(32) sample_composition_time_offset; }
       } [sample_count ]
       }
``` |

[Table 22] above shows composition of trun(TrackRunBox) Box of the current ISOFF. In [Table 22] above, one trun Box provides information on samples within the fragment. Information which can be indicated using trun among MPU information includes number_of_au, presentation_order, duration_of_au and the like. It is preferable that number_of_au is indicated using sample_count, and presentation_order and duration_of_au are combined and then indicated using sample_composition_time_offset.

Meanwhile, since decoding_order, number_of_mfu, and mfu_id are not expressed in trun, decoding_order is indicated by sample_decoding_order, and number_of_mfu and mfu_id are changed to indicate an ID of a start MFU and an ID of an end MFU and then indicated by subsample_start_id and subsample_end_id.

In order to provide decoding_order, subsample_start_id, and subsample_end_id to an optional field, the present invention proposes the following expansion of tf_flags.
- 0x001000 decoding-order-present: each sample in trun has its decoding order, otherwise samples are aligned in decoding order.
- 0x002000 subsample-start/end-id-present: each sample consists of subsample from subsample_start_id to subsample_end_id. It refers mfu_id in mfu_ box.

When 0x1000 is included in a value of tf_flags, decoding_order exists. When 0x1000 is not included in the value of tf_flags, AUs should be arranged according to the decoding order.

When 0x2000 is included in the value of tf_flags, IDs of the MUFs included in the AU are indicated by subsample_start_id and subsample_end_id. Values indicated by Subsample_start_id and subsample_end_id correspond to values of mfu_id of the MFU. When the trun Box is used in the MPU, 0x2000 of the values of tf_flags is recommended to be always used.

Accordingly, the trun Box is proposed to be expanded as shown in [Table 23] below.

**[Table 23]**

| |
|---|
| ```
 aligned(8) class TrackRunBox
 extends FullBox('trun', version, tf_flags) {
  unsigned int(32) sample_count;//number_of_au
  {
   unsigned int(32) sample_duration;
   if (version == 0) {
    uint(32) sample_composition_time_offset;
   }
   else {
    int(32) sample_composition_time_offset;
   }
   uint(32) decoding_order;//flag=0x1000
   uint(32) subsample_start_id;//flag=0x2000
   uint(32) subsample_end_id; //flag=0x2000
  } [sample_count]
 }
``` |

[Table 23] above shows an expanded trun Box. In [Table 23], information of the MPU which is not expressed in trun or tfhd includes asset_id, mpu_sequence_number, parameter_set and the like.

Asset_id, and mpu_sequence_number are components of the MMT, which are information to allow the MPU to operate, so that it is preferable to newly define and then insert mpu_ Box.

Further, parameter set information has an expression variable depending on various codecs. Accordingly, Decoder Configuration Initialization Information is newly defined and expressed as shown in [Table 24] in order to allow contents and formats of data to vary according to a type for the expandability.

**[Table 24]**

| |
|---|
| ```
 DecoderConfigurationInitializationInformation () {
 uint(32) type;
 uint(32) length;
 bit(8*length) InitializationInfoData;
 }
``` |

[Table 24] above shows Decoder Configuration Initialization Information. Accordingly, the MPU has composition as illustrated in FIG. 11.

FIG. 11 illustrates composition of mpu_ Box and mfu_ Box according to a tenth embodiment of the present invention.

Actual syntax of mpu_ Box of FIG. 11 is shown in [Table 25] below.

**[Table 25]**

| |
|---|
| ```
 aligned(8) class MMTProcessingUnitBox
  extends Box('mpu ') {
  uint(32) asset_id;
  uint(32) mpu_sequence_number;
  DecoderConfigurationInitializationInformation;
  TrackFragmentHeaderBox;
  TrackRunBox;
 }
``` |

[Table 25] above shows MMTProcessingBox. In [Table 25], asset_id indicates an ID of the asset including the corresponding MPU. mpu_sequence_number indicates is a sequence number of the corresponding MPU which is a value increased by 1 from a previous MPU within the asset. DecoderConfigurationInitializationInformation, TrackFragmentHeaderBox, and TrackRunBox are the same as described above.

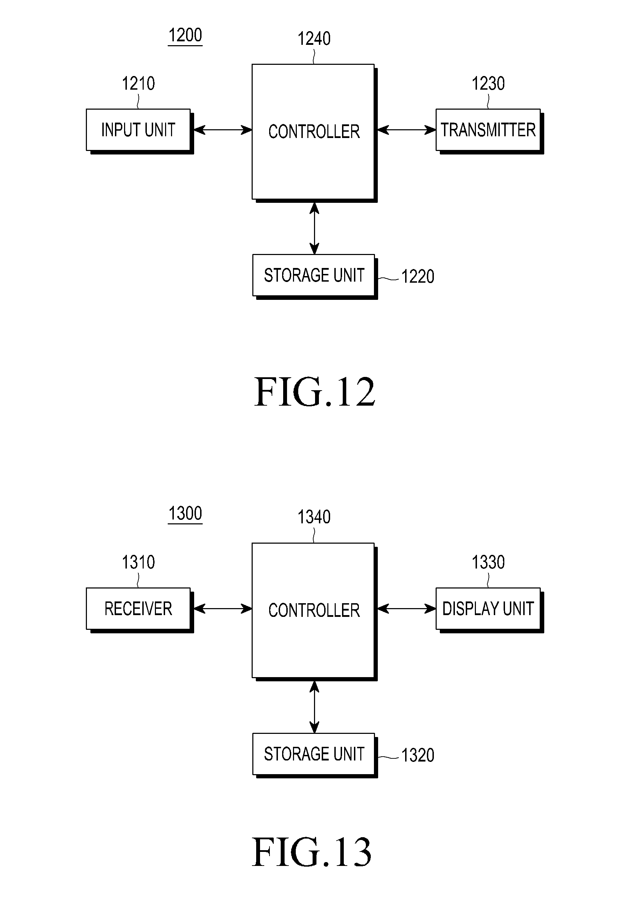

FIG. 12 is a block diagram illustrating a configuration of a transmission apparatus that generates adaptive media composition and transmits the generated adaptive media composition according to an embodiment of the present invention.

In FIG. 12, a transmission apparatus 1200 includes an input unit 1210, a storage unit 1220, a transmitter 1230, and a controller 1240. Further, the transmission apparatus 1200 supports adaptive media composition including the MPU composition, composition of the transmission packet and reception packet, the logical asset composition, the method of providing the presentation information and providing the decoding order information in the closed GOP, the method of providing the presentation information and providing the decoding order information in the open GOP, composition of the MFU box, and composition of mpu_ Box and mfu_ Box. The transmission apparatus 1200 determines the transport unit according to the adaptive media composition, composes at least one multimedia source in the transport unit of the MPU, the MFU, the asset, or the package according to the determined transport unit, and transmits the multimedia source.

In FIG. 12, the input unit 1210 receives various types of multimedia data from the multimedia source for generating complex media contents. The storage unit 1220 stores the assets generated according to a method of composing the MPU, the MFU, or the asset provided by the present invention. The transmission unit 1230 transmits the assets through a determined communication network. The controller 1240 performs general controls for generating and transmitting the MFU, the MPU, and the asset provided by the present invention in order to generate at least one multimedia data (source) with the adaptive media composition.

FIG. 13 is a block diagram illustrating a configuration of a reception apparatus that receives media contents according to an embodiment of the present invention.

In FIG. 13, a reception apparatus 1300 includes a receiver 501, a multimedia source reader 503, a multimedia source storage unit 505, a display unit 507, and a controller 509.

Further, in FIG. 13, the reception apparatus supports the adaptive media composition described in FIGs. 2 to 11 and decodes media contents received in the transport unit of the adaptive media composition.

In FIG. 13, the reception unit 1310 receives the MPU and the asset including the MFU according to various multimedia data (source) through a determined communication network, and various information (information related to the adaptive media composition) included in the asset is transmitted to the controller 1340 and then used for controlling and decoding the reception of complex media contents.

Further, the controller 1340 performs general controls related to information on the MPU and reception and decoding of complex media contents by using the information on the MPU.

Moreover, the controller 1340 reads a data type of the multimedia source, and distinguishes the read multimedia sources and then stores the distinguished multimedia sources in the storage unit 1320. Furthermore, the controller 1340 performs general controls for receiving the asset and reading and decoding the multimedia source, and data of the decoded multimedia source is output through the display unit 1330.

While the present invention has been shown and described with reference to certain embodiments thereof, it will be understood by those skilled in the art that various changes in form and details may be made therein without departing from the scope of the present invention. Therefore, the scope of the present invention should not be limited to the aforementioned embodiments but should be defined by the appended claims and the equivalent thereof.

## Claims

1. A method of transmitting adaptive media composition in a multimedia system, the method comprising:
configuring Media Fragment Units (MFUs) included in an Access Unit (AU) and a Media Processing Unit (MPU) as one asset; and
inserting the configured asset into Composition Information (CI) and transmitting the CI,
wherein the MFU includes type information indicating whether the MFU corresponds an AU type or a slice type.

2. The method of claim 1, wherein the configuring of the MFUs comprises, when the MFU corresponds to the AU type, configuring the MFUs not to include priority information indicating a priority of the MFU within the AU and dependent counter information indicating a dependent relation between the MFU and another MFU.

3. The method of claim 1, wherein the configuring of the MFUs comprises, when the MFU does not correspond to the AU type, configuring to include priority information indicating a priority of the MFU within the AU and dependent counter information indicating a dependent relation between the MFU and another MFU in composition information of the MFU.

4. The method of claim 1, wherein the type information includes position information of the MFU located within the AU when the MFU does not correspond to the AU type.

5. A method of transmitting adaptive media composition in a multimedia system, the method comprising:
configuring Media Fragment Units (MFUs) included in an Access Unit (AU) and a Media Processing Unit (MPU) including information on a number of MFUs as one asset; and
inserting the configured asset into Composition Information (CI) and transmitting the CI.

6. The method of claim 5, wherein the MPU includes identification information of each of the MFUs.

7. The method of claim 5, wherein the MFU includes start code information detecting a boundary of the MFUs and Error Detection code (EDC) information verifying validity.

8. The method of claim 5, wherein the MPU includes at least one of identification information of the asset and a sequence number of the MPU.

9. The method of claim 5, wherein the MPU includes attribute information indicating whether media data included in the MPU includes a time attribute or a non-time attribute.

10. The method of claim 5, wherein the MPU includes at least one of presentation time information and decoding time information of the AU.

11. The method of claim 5, wherein the MPU includes decoder setting information.

12. The method of claim 11, wherein the decoder setting information includes at least one of a Sequence Parameter Set (SPS) and a Picture Parameter Set (PPS).

13. An apparatus for transmitting adaptive media composition in a multimedia system, the apparatus comprising:
a controller that configures a Media Fragment Unit (MFU) and a Media Processing Unit (MPU) as one asset; and
a transmitter that inserts the configured asset into Composition Information (CI) and transmits the CI according to a control of the controller,
wherein the MFU includes type information indicating whether the MFU corresponds to an Access Unit (AU) type or a slice type.

14. The apparatus of claim 13, wherein the controller configures the MFUs not to include priority information indicating a priority of the MFU within the AU and dependent counter information indicating a dependent relation between the MFU and another MFU when the MFU corresponds to the AU type.

15. The apparatus of claim 13, wherein the controller configures to include priority information indicating a priority of the MFU within the AU and dependent counter information indicating a dependent relation between the MFU and another MFU when the MFU does not correspond to the AU type in composition information of the MFU.

16. An apparatus applied to perform a method in one of claims 5 to 12.
